## Europäisches Patentamt

## European Patent Office

## Office européen des brevets

(11) Veröffentlichungsnummer: **0 126 983**
**A1**

(12) # EUROPÄISCHE PATENTANMELDUNG

(21) Anmeldenummer: 84104667.5

(22) Anmeldetag: 26.04.84

(51) Int. Cl.³: **G 01 K 5/32**
G 01 D 5/04, G 01 D 13/04

(30) Priorität: 21.05.83 DE 3318616

(43) Veröffentlichungstag der Anmeldung:
05.12.84 Patentblatt 84/49

(84) Benannte Vertragsstaaten:
AT CH DE FR GB IT LI NL SE

(71) Anmelder: E.G.O. Elektro-Geräte Blanc u. Fischer
Postfach 1180
D-7519 Oberderdingen(DE)

(72) Erfinder: Essig, Willi
Tribergerstrasse 3
D-7030 Böblingen(DE)

(72) Erfinder: Schlenker, Bruno
Bahnhofstrasse 3
D-7519 Sulzfeld(DE)

(74) Vertreter: Patentanwälte Ruff und Beier
Neckarstrasse 50
D-7000 Stuttgart 1(DE)

(54) Thermometer.

(57) Es handelt sich um ein verkapseltes Thermometer mit Ausdehnungsdose (3), die auf einen von zwei Lenkern (5, 6) eines Parallelogrammgestänges wirkt und dadurch eine Zeigerplatte (7) entlang der Innenseite eines durchsichtigen Skalendeckels (2) bewegt. Die einzelnen anzuzeigenden Temperaturbereiche werden durch Farbsymbole dargestellt, die eine optische Übersetzung der Zeigerbewegung bilden.

Fig.1

Croydon Printing Company Ltd

EP 0 126 983 A1

Anmelderin:         E.G.O. Elektro-Geräte
                    Blanc u. Fischer
                    Rote-Tor-Straße
                    7519 Oberderdingen


Thermometer

Die Erfindung betrifft ein Thermometer mit einer an einem Träger an einer Seite abgestützten Ausdehnungsdose, die über ein Kapillarrohr mit einem Temperaturfühler in Verbindung steht und deren andere Seite mit einem optischen, beweglich gelagerten Zeiger für die Temperaturanzeige mechanisch verbunden ist.

Derartige Thermometer werden beispielsweise an Elektrogeräten oder anderen Einrichtungen zur Temperaturüberwachung eingesetzt, wobei der Temperaturfühler in dem zu überwachenden Bereich angeordnet und über das Kapillarrohr mit dem die Ausdehnungsdose enthaltenden Anzeigeteil verbunden ist, welcher seinerseits in einem zur Beobachtung geeigneten Bereich angeordnet ist.

Der Erfindung liegt die Aufgabe zugrunde, ein Thermometer zu schaffen, welches bei einfacher Ausbildung eine leicht auch aus größerer Entfernung erkennbare Temperatur- bzw. Temperaturbereichsanzeige ermöglicht.

-2-

Dies wird bei einem Thermometer der eingangs genannten
Art gemäß der Erfindung dadurch erreicht, daß die zugehörige Seite der Ausdehnungsdose unmittelbar an einem
am Träger gelagerten Lenker angreift, der in einem gegenüber dem Abstand der Ausdehnungsdose größeren Abstand
von der Lagerstelle am Träger mit dem Zeiger verbunden
ist. Dadurch führt der Zeiger eine wenigstens angenähert
geradlinige Anzeigebewegung aus, deren Weggröße lediglich
durch entsprechende Bestimmung der am Lenker angreifenden
Hebelverhältnisse den jeweiligen Erfordernissen angepaßt
werden kann.

Ist die Ausdehnungsdose unmittelbar am Lenker, insbesondere
mit einer in ihrer Achse liegenden und/oder das Kapillarrohr umschließenden Federmutter oder dgl. befestigt, so
bedarf es zur Obertragung der Dehnungsveränderung der Ausdehnungsdose auf den Zeiger lediglich des Lenkers und
keiner weiteren Obertragungsglieder, wodurch die Anzeigegenauigkeit weiter verbessert wird. Dies wird noch wesentlich dadurch verbessert, daß der Zeiger unmittelbar an dem
Lenker befestigt ist.

Bei einer baulich besonders einfachen Ausführungsform ist
der Lenker durch einen federnden Arm, insbesondere eine
Blattfeder, gebildet, die starr in den Träger und/oder in
den Zeiger eingespannt, insbesondere durch formschlüssige
Einbettung befestigt ist. Zur Schaffung der gelenkartigen
Lagerstellen des Lenkers sind somit keine achsdefinierten
Lager erforderlich, sondern es wird hierfür die Elastizität
des Lenkers in sich genutzt, welche gleichzeitig die Rückstellung des Zeigers zur Ausgangslager bewirkt, so daß
gesonderte Rückstellelemente nicht erforderlich sind.

Der leichte Gang der Gelenkigkeit des Lenkers kann in einfacher Weise dadurch verbessert werden, daß der Lenker
zwischen der Befestigungsstelle der Ausdehnungsdose und
der Lagerstelle am Träger eine zur Ausdehnungsdose gerichtete Abköpfung aufweist, derart, daß die Lagerstelle
in Achsrichtung der Ausdehnungsdose näher bei dieser als
die Befestigungsstelle liegt. Der übrige Abschnitt des
Lenkers ist demgegenüber in einfacher Weise geradlinig
bzw. eben.

Um den Zeiger in eine geradlinige Anzeigebewegung zu bringen, ist es beispielsweise denkbar, den Zeiger in einer
entsprechenden Führung des Trägers zu lagern. Eine besonders
vorteilhafte Weiterbildung des Erfindungsgegenstandes besteht jedoch darin, daß zwei, insbesondere gleiche Lenker
nach Art eines Parallelogrammgestänges vorgesehen und am
Träger gelagert sowie mit dem Zeiger verbunden sind, und
daß die Ausdehnungsdose vorzugsweise nur an einem Lenker
befestigt ist. Dadurch wird der Zeiger leichtgängig ausschließlich von den Lenkern getragen und bei sehr einfacher
Ausbildung des Thermometers trotzdem sehr genau geradlinig bewegt. Die maximale Weggröße ist dabei so gewählt,
daß die durch die Schrägstellung des Parallelogrammgestänges bewirkte Querbewegung des Zeigers hinsichtlich der
Anzeigedeutlichkeit vernachlässigt werden kann.

Zweckmäßig ist der Zeiger am freien Ende des Lenkers angeordnet, so daß seine von den Lenkern abgekehrte Seite für
die Darstellung der Anzeige beliebig gestaltet werden kann.

Der Zeiger kann zusätzlich am Träger geführt sein. Beispielsweise ist der Zeiger plattenförmig ausgebildet und
mit den parallel zu seiner Bewegungsrichtung liegenden
Seitenkanten am Träger geführt. Es ist aber auch in sehr
vorteilhafter Weise denkbar, den Zeiger so anzuordnen, daß er zwischen seinen Endstellungen völlig berührungsfrei gegenüber dem Träger steht und somit hinsichtlich seiner Lagerung keinerlei Reibung ausgesetzt ist.

Zum Schutz des Zeigers sowie der beweglichen bzw. empfindlichen Teile des Thermometers ist der Träger als die Ausdehnungsdose, den bzw. die Lenker und/oder den Zeiger aufnehmendes Gehäuse ausgebildet, wobei vorzugsweise die Ausdehnungsdose benachbart zum Boden des topfförmigen Gehäuses und der Zeiger benachbart zu einem das Gehäuse schließenden, dem Boden gegenüberliegenden Gehäusedeckel angeordnet sind, wodurch sich eine sehr einfache Montage bzw. Herstellung des Thermometers ergibt.

Die gehäuseförmige Ausbildung des Trägers ermöglicht es auch, daß der Zeiger mit geringem Spaltabstand an den Innenflächen der zugehörigen Seitenwände des Trägers geführt ist, so daß die beweglichen Teile des Thermometers auch bei relativ hohen Beschleunigungen, wie sie beispielsweise auftreten können, wenn das Thermometer versehentlich auf den Boden fällt oder einem Schlag ausgesetzt ist, nicht verformt werden können. Die Endstellungen des Zeigers können in einfacher Weise durch Anschlagstellungen definiert sein, die durch Anlage des Zeigers an den Innenflächen der quer zur Achse der Ausdehnungsdose liegenden Trägerwände bestimmt sind.

Die Ausdehnungsdose ist zweckmäßig raumsparend zwischen einem Lenker und der zu diesem benachbarten Trägerwand angeordnet, wobei vorzugsweise das Kapillarrohr zwischen den Lenkern zur Ausdehnungsdose geführt ist.

Auch die Ausdehnungsdose kann in ihrer ausgerichteten Lage gegenüber dem Träger sehr gut dadurch gesichert werden, daß sie mit ihrer Umfangsfläche an den Innenflächen zweier
gegenüberliegender Trägerwände anliegt. Zur Justierung
des Thermometers ist ein Stellglied, insbesondere eine
Gewindespindel, vorgesehen, die in der Achse der Ausdehnungsdose liegt und vorzugsweise in der zu dieser benachbarten Trägerwand gelagert ist, wobei insbesondere
die Abstützfläche des Stellgliedes für die Ausdehnungsdose ballig gekrümmt ist, so daß sich bei den Relativbewegungen der Ausdehnungsdose gegenüber dem Stellglied
durch abwälzende Anlage eine möglichst geringe Reibung
ergibt.

Vorteilhaft greift die Ausdehnungsdose mit einem Abschnitt
ihres Umfanges in eine vorzugsweise im Boden des Trägers
vorgesehene Fensteröffnung ein, deren Erstreckung in Achsrichtung der Ausdehnungsdose mindestens so groß wie
deren größter Stellweg ist. Dadurch ist die Ausdehnungsdose weiter gegenüber dem Träger gesichert, und ihre Bewegungen beim Justieren mit Hilfe des Stellgliedes können
von außen beobachtet werden. Ferner erfolgt durch die
Fensteröffnung eine Belüftung des Gehäuses.

Zur Erzielung einer besonders einfach und deutlich zu erkennenden Anzeige ist der Zeiger an seiner von der Ausdehnungsdose abgekehrten Seite mit sich über den Bewegungsweg des Zeigers aufeinanderfolgend auf Skalenglieder des
Trägers ausrichtenden Anzeigeorganen, wie Farblinien,
versehen, denen als Skalenglieder insbesondere linienförmige Sichtöffnungen zugeordnet sind. Je nachdem, im
Bereich welcher der hintereinanderliegenden Skalenglieder
die Anzeigeorgane sichtbar werden bzw. zur Ausrichtung
gelangen, ist die gemessene Temperatur erkennbar. Die Anordnung kann dabei so getroffen werden, daß in einer Endstellung des Zeigers, insbesondere in seiner der Maximalanzeige entsprechenden Endstellung alle Anzeigeorgane
auf alle Skalenglieder ausgerichtet sind, daß also bei
zunehmender Temperatur aufeinanderfolgend die Anzeigeorgane in Ausrichtung zu den Skalengliedern gelangen
und in dieser Ausrichtung verbleiben. Es ist aber auch
denkbar, die Anzeigeorgane so schmal auszubilden, daß
jedes Anzeigeorgan nach der Ausrichtung auf ein Skalenglied und nachfolgender weiterer Bewegung des Zeigers
in Richtung zur Maximallage wieder in eine Lage gelangt,
in welcher es nicht mehr gegenüber dem zugehörigen Skalenglied ausgerichtet ist.

Die Anzeigeorgane einerseits und die Skalenglieder andererseits können untereinander in ungleicher Teilung, d.h. derart angeordnet sein, daß benachbarte Anzeigeorgane bzw.
Skalenglieder unterschiedliche Abstände voneinander haben.
Bei einer einfachen Ausführungsform sind sie jedoch in
konstanter Teilung angeordnet, wobei vorzugsweise die Anzeigeorgane von einem Skalenende zum anderen in der Breite
zunehmen.

Die einfache und deutliche Erkennbarkeit der Anzeige kann
auch dadurch verbessert werden, daß die Skalenglieder am
Gehäusedeckel vorgesehen sind, der vorzugsweise aus glasklarem Werkstoff besteht, welcher unter Freilassung der,
insbesondere in Bewegungsrichtung des Zeigers gleichbreiten Sichtöffnungen mit einer im wesentlichen undurchsichtigen Deckschicht versehen ist. Die Deckschicht wie
auch die die Anzeigeorgane bildenden Farbschichten können
z.B. Siebdruckschichten sein.

Die Erfindung wird im folgenden mit weiteren Einzelheiten
anhand des in den Zeichnungen dargestellten Ausführungsbeispieles näher erläutert. Es sind dargestellt in

Fig. 1    ein erfindungsgemäßes Thermometer im Schnitt,

Fig. 2    das Thermometer gemäß Fig. 1 in teilgeschnittener Seitenansicht,

Fig. 3    ein Schnitt nach der Linie III-III in Fig. 1,

Fig. 4    das Thermometer in einer Betrachtungsebene gemäß

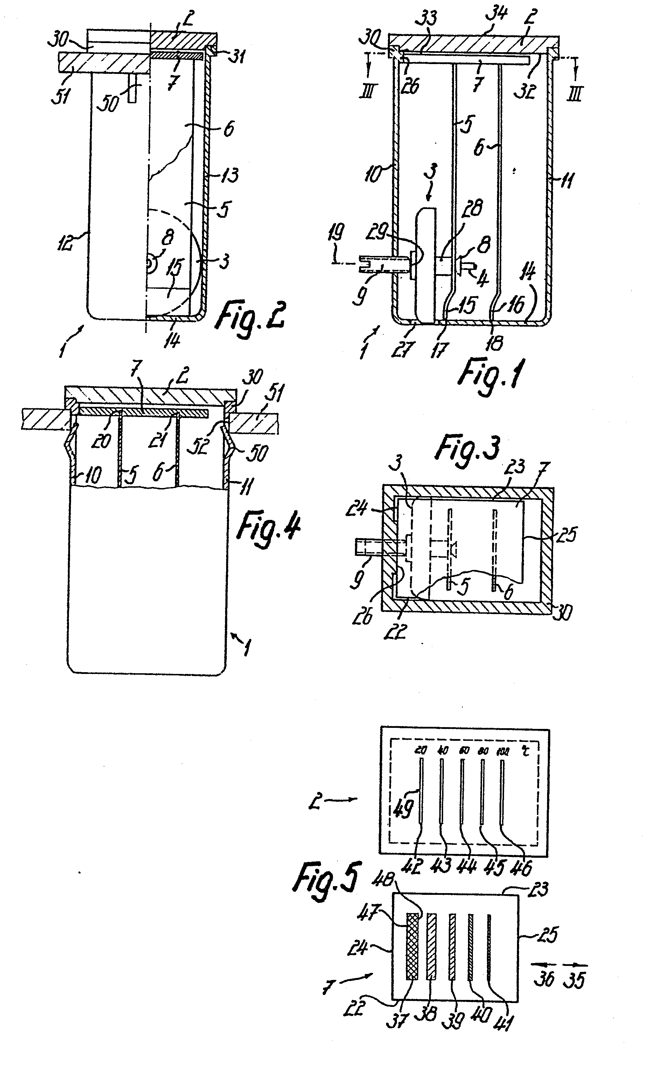

          Fig. 1, jedoch teilweise im Mittelschnitt, und

Fig. 5    Skala und Zeiger des Thermometers in nebeneinander gesetzter Draufsicht und Ausrichtung in der
          Ausgangslage des Zeigers.

Wie die Figuren 1 bis 4 zeigen, weist ein erfindungsgemäßes Thermometer einen gehäuseförmigen, mit einem Gehäusedeckel 2 verschlossenen Träger 1 auf, in welchem eine an
ein Kapillarrohr 4 angeschlossene Ausdehnungsdose 3, zwei
im wesentlichen parallele Lenker 5, 6 und ein plattenförmiger Zeiger 7 angeordnet sind. Die Ausdehnungsdose 3
ist mit einer Federmutter 8 an einem Lenker befestigt und
mit der gegenüberliegenden Stirnseite an einem Stellglied 9
abgestützt, welches seinerseits in einer Gehäusewandung gelagert ist.

Der im wesentlichen kubische, in Ansicht auf den Gehäusedeckel 2 länglich rechteckige Träger 1 weist vier zum Gehäusedeckel 2 rechtwinklige Wandungen 10 bis 13 auf, von
denen jeweils zwei parallel einander gegenüberstehen und
die an der dem Gehäusedeckel 2 gegenüberliegenden Gehäuseseite über einen rechtwinklig zu ihnen liegenden Gehäuseboden 14 miteinander verbunden sind. Im Querschnitt gehen
die Gehäusewandungen 10 bis 13 über viertelkreisförmig
gekrümmte Abschnitte in den ebenso wie die Gehäusewandungen
ebenen Gehäuseboden 14 über. Die beiden durch gleiche,
streifenförmige Blattfedern gebildeten Lenker 5, 6 sind
so in dem Gehäuse angeordnet, daß sie bei Ausgangslage
des Zeigers 7 wenigstens annähernd parallel zu den schmalen Gehäusewandungen 10, 11 stehen und nahezu gleichen Abstand voneinander wie von der jeweils benachbarten Gehäusewand 10 bzw. 11 haben. Die dem Gehäuseboden 14 zugekehrten Endabschnitte 15, 16 der Lenker 5, 6 sind gleichsinnig und mit gleichen Abmessungen quer zu den Ebenen der Blattfedern abgekröpft, derart, daß ihre zugehörigen Enden 17, 18 gegenüber den übrigen Abschnitten des jeweils zugehörigen Lenkers näher bei derjenigen Gehäusewand 10 liegen, zu welcher sich der Zeiger 7 bei seiner Bewegung zur Ausgangslage hin bewegt. Diese Enden 17, 18 liegen jedoch bei Ausgangslage des Zeigers 7 im wesentlichen parallel zu den Hauptabschnitten der Lenker 5, 6 bzw. rechtwinklig zur Mittelachse 19 der Ausdehnungsdose 3. Die Enden 17, 18 sind in dieser Ausrichtung, z.B. im Spritzgußverfahren, in den Gehäuseboden 14 eingebettet und dadurch formstarr gegenüber dem Träger 1 verankert. In entsprechender Weise sind die anderen Enden 20, 21 in den Zeiger 7 eingebettet und dadurch formstarr verankert, wobei der Abstand der Enden 17, 18 voneinander gleich dem Abstand der Enden 20, 21 voneinander ist und beide Lenker 5, 6 gleiche Länge haben bzw. hinsichtlich ihrer äußeren Formgebung gleich ausgebildet sind. Der Zeiger 7 ist durch eine rechteckige ebene Platte gebildet, deren Breite nur geringfügig kleiner als die lichte Breite des Trägers zwischen den breiteren Gehäusewandungen 12, 13 ist und deren Länge gegenüber der lichten Breite zwischen den schmaleren Gehäusewandungen 10, 11 wenigstens um den maximalen Stellweg des Zeigers 7 kleiner ist. Der in Ausgangslage wenigstens annähernd parallel zum Gehäuseboden 14 bzw. rechtwinklig zu den Gehäusewandungen 10 bis 13 liegende Zeiger 7 weist parallel zu den benachbarten Gehäusewandungen 12, 13 liegende, in Draufsicht gemäß Fig. 3 geradlinige Kantenflächen 22, 23 auf, die jeweils nur einen sehr kleinen Spaltabstand von der Innenfläche der gegenüberliegenden Gehäusewandung 12, 13 haben, jedoch in erschütterungsfreiem Zustand des Thermometers gegenüber
diesen Innenflächen bei jeder Zeigerstellung völlig berührungsfrei sind, derart, daß der Zeiger 7 ausschließlich von den Lenkern 5, 6 fliegend getragen wird. Eine,
zu den Kantenflächen 22, 23 rechtwinklig liegende Querkante 24 des Zeigers 7 liegt in dessen Ausgangsstellung
an einem anschlagartigen Vorsprung 26 an der Innenseite
der zugehörigen Gehäusewandung 10 an, wodurch die Ausgangslage des Zeigers 7 genau bestimmt ist. Bei der geringsten Bewegung des Zeigers 7 aus der Ausgangslage
löst sich die Querkante 24 sofort vollständig von der
Berührung mit dem Träger 1. Die andere Querkante 25 liegt
bei Ausgangslage des Zeigers 7 mit einem Abstand von der
gegenüberliegenden Innenfläche der zugehörigen Gehäusewandung 11, welcher dem maximalen Bewegungsweg des
Zeigers 7 entspricht.

Die Lenker 5, 6 können gleich breit wie der Zeiger 7 oder
- wie dargestellt - demgegenüber schmaler ausgebildet
sein und weisen parallele Seitenkanten sowie gleiche
Breite auf. Auch die Lenker 5, 6 verlaufen von ihren Enden
17, 18 bis zum Zeiger 7 gegenüber dem Träger 1 völlig berührungsfrei, wobei ihre Seitenkanten zweckmäßig gleiche
Abstände von beiden gegenüberliegenden Gehäusewandungen
12, 13 haben. Die über ihre Länge konstante Querschnitte
aufweisenden Lenker können aus Abschnitten von Bandmaterial
gefertigt sein.

Zwischen einem Lenker 5 und der zu diesem parallelen,
benachbarten Gehäusewandung 10 ist die Ausdehnungsdose 3
angeordnet. Die in Axialansicht kreisrunde Ausdehnungsdose 3 hat beispielsweise einen Durchmesser, der annähernd
gleich dem lichten Abstand zwischen denjenigen Gehäusewandungen 12, 13 ist, die parallel zur Mittelachse 9 stehen,
so daß die Ausdehnungsdose 3 zwischen diesen Gehäusewandungen ausgerichtet ist. Die mit ihrem Dosenteil etwa in
der Mitte zwischen dem Lenker 5 und der Gehäusewandung 10 angeordnete Ausdehnungsdose 3, die rechtwinklig zum
Gehäuseboden 14 stehende Stirnseiten aufweist, ist unmittelbar benachbart zum Gehäuseboden 14 derart angeordnet, daß ein Umfangsabschnitt in eine Fensteröffnung 27
im Gehäuseboden 14 eingreift, jedoch nicht über die Außenfläche des Gehäusebodens 14 vorsteht. Die Fensteröffnung 27
ist in Richtung der Mittelachse 19 größer als die entsprechende Erstreckung des in sie eingreifenden Abschnittes
des Dosenteiles der Ausdehnungsdose 3, derart, daß keine
Berührung zwischen dem Dosenteil und dem Gehäuseboden 14
stattfindet. An der dem Lenker 5 zugekehrten Seite ist der
Dosenteil der Ausdehnungsdose 3 mit einem in der Mittelachse 19 liegenden zylindrischen Anschlußstück 28 versehen,
dessen Durchmesser gegenüber demjenigen des Dosenteiles
wesentlich kleiner ist und das mit seiner vom Dosenteil
abgekehrten, zur Mittelachse 19 rechtwinkligen ebenen
ringförmigen Stirnfläche an der der Ausdehnungsdose 3 zugekehrten Seite des Lenkers 5 in der Mitte von dessen
Breite anliegt. Das aus dieser Stirnseite des Anschlußstückes 28 hervortretende, im Durchmesser gegenüber dem
Anschlußstück 28 wesentlich kleinere Kapillarrohr 4 durchsetzt eine seinem Durchmesser entsprechende, in der Mittelachse 19 liegende Öffnung im Lenker 5 und ist in nicht
näher dargestellter Weise an geeigneter Stelle derart
aus dem Träger 1 herausgeführt, daß keine Berührung mit
den Lenkern 5, 6 oder dem Zeiger 7 möglich ist. Am anderen
Ende ist am Kapillarrohr 4 ein nicht näher dargestellter
Temperaturfühler angeordnet. Auf der von der Ausdehnungsdose 3 abgekehrten Seite des Lenkers 5 ist um das Kapillarrohr 4 die Federmutter 8 so angeordnet, daß der Lenker 5
zwischen dem Anschlußstück 28 und der Federmutter 8 verspannt ist. Die Befestigungsstelle zwischen Ausdehnungsdose 3 und Lenker 5 liegt dabei mit geringem Abstand benachbart zum Beginn der Abkröpfung des zugehörigen Endabschnittes 15 des Lenkers 5 an dessen ebenem Hauptabschnitt. Der im Bereich des Dosenteiles liegende größte Durchmesser der Ausdehnungsdose 3 ist kleiner als die Hälfte der Länge der Lenker 5, so daß der Abstand der Ausdehnungsdose 3 vom Zeiger 7 größer als ihr Durchmesser ist. Der Endabschnitt 15 bzw. das Ende 17 des Lenkers 5 liegt näher bei dem Dosenteil der Ausdehnungsdose 3 als der Hauptabschnitt des Lenkers 5. Der Abstand des Lenkers 5 von der benachbarten Gehäusewandung 10 ist geringfügig größer als der Abstand des Lenkers 6 von seiner benachbarten Gehäusewandung 11. Der Dosenteil der Ausdehnungsdose 3 liegt im wesentlichen in der Mitte zwischen dem Hauptabschnitt des Lenkers 5 und der benachbarten Gehäusewandung 10.

In der zum Lenker 5 benachbarten Gehäusewandung 10 ist das Stellglied 9 in Form einer mit einem Außengewinde versehenen Stellspindel in einer Gewindebohrung in der Mittelachse 19 gelagert. Das über die Außenseite und die Innenseite der Gehäusewandung 10 vorstehende Stellglied 9 weist an seiner der Ausdehnungsdose 3 zugekehrten Stirnfläche eine ballig gekrümmte Abstützfläche 29 auf, an welcher die Ausdehnungsdose 3 mit ihrer von dem Lenker 5 abgekehrten Stirnfläche in der Mittelachse 19 punktförmig mit geringer Vorspannung anliegt. Am äußeren Ende ist das Stellglied 9 mit einem Stirnschlitz oder einem ähnlichen Formschlußglied für den Eingriff eines Werkzeuges versehen, mit dessen Hilfe das Stellglied 9 in beiden Richtungen bewegt und dadurch in Richtung der Mittelachse 19 zur Justierung des Thermometers verstellt werden kann.

An der vom Gehäuseboden 14 abgekehrten Seite bildet der Träger 1 eine Gehäuseöffnung, in deren Bereich die Gehäusewandungen 10 bis 13 zur Bildung eines Flanschrandes 30 im Querschnitt derart vergrößert sind, daß ihre Innenflächen durchgehend eben sind, an den Außenflächen jedoch ein
Flanschwulst entsteht. In die Gehäuseöffnung ist der im
wesentlichen ebene Gehäusedeckel 2 eingesetzt, der im
Randbereich an seiner Innenfläche eine abgesetzte Schulter
31 aufweist, derart, daß er zentriert zwischen die Innenflächen der Gehäusewandungen 10 bis 13 eingreift und mit
seiner ebenen Schulterfläche 31 an der ebenen Stirnfläche des Flanschrandes 30 anliegt, an welcher er beispielsweise durch Verkleben befestigt sein kann. Die
ebene Innenfläche 32 des Gehäusedeckels 2 liegt bei Ausgangslage des Zeigers 7 parallel zu dessen dieser Innenfläche 32 zugekehrter Oberfläche 33 und mit sehr geringem
Spaltabstand von dieser Oberfläche 33, jedoch derart, daß
bei jeder Zeigerstellung eine Berührung zwischen Zeiger 7
und Gehäusedeckel 2 ausgeschlossen ist. Die ebene Außenfläche 34 des Gehäusedeckels 2 liegt bei Ausgangsstellung
des Zeigers 7 ebenfalls parallel zu dessen Oberfläche 33.

Wie Fig. 5 zeigt, sind an der Oberfläche 33 des Zeigers 7
in dessen Bewegungsrichtung Pfeil 35 bzw. 36 hintereinander
Anzeigeorgane 37 bis 41 angeordnet, die z.B. durch im
Siebdruckverfahren auf die Oberfläche 33 aufgebrachte
Farbschichten unterschiedlicher Farbgebung gebildet sein
können. Die streifenförmigen, zur Bewegungsrichtung Pfeil
35 bzw. 36 rechtwinkligen Anzeigeorgane 37 bis 41 nehmen
von der Querkante 24 zur Querkante 25 in der Breite, d.h.
in ihrer zur Bewegungsrichtung Pfeil 35 bzw. 36 parallelen
Erstreckung abgestuft jeweils um ein Maß ab, welches gleich
der Breite von sichtschlitzartigen Skalengliedern 42 bis 46
des Gehäusedeckels 2 ist. Die der Querkante 24 des Zeigers 7
zugekehrten Begrenzungen 47 der Anzeigeorgane 37 bis 41
sind dabei in gleicher Teilung wie die Skalenglieder 42 bis
46 angeordnet; im dargestellten Ausführungsbeispiel ist
die Teilung der Skalenglieder 42 bis 46, d.h. der Abstand
zwischen benachbarten Skalengliedern, konstant. Bei Ausgangslage des Zeigers 7 fällt in Ansicht auf die Skala
die von der Querkante 24 abgekehrte Begrenzung 48 des
zur Querkante 24 benachbarten Anzeigeorganes 37 mit der
zur Querkante 24 benachbarten Begrenzung 49 des zu dieser
Querkante 24 benachbarten ersten Skalengliedes 42 wenigstens
annähernd zusammen, derart, daß in keinem Skalenglied 42
bis 46 ein Anzeigeorgan 37 bis 41 sichtbar ist. Durch die
beschriebene Ausbildung sind in dieser Zeigerstellung die
von der Querkante 24 abgekehrten Begrenzungen der übrigen
Anzeigeorgane 38 bis 41 gegenüber der zur Querkante 24
benachbarten Begrenzung des jeweils zugehörigen Skalengliedes 43 bzw. 44 bzw. 45 bzw. 46 zurückversetzt, wobei
das Maß, um welches die Anzeigeorgane zurückversetzt sind,
mit zunehmendem Abstand von der Querkante 24 um das erwähnte Stufenmaß zunimmt. Wird der Zeiger 7 aus seiner
Ausgangslage in Richtung Pfeil 35 zu seiner der Maximalanzeige entsprechenden Endstellung hin bewegt, so erscheint
zuerst das Anzeigeorgan 37 in dem Skalenglied 42, bis die
von der Querkante 24 abgekehrte Begrenzungskante des nächstfolgenden Anzeigeorganes 38 mit der der Querkante 24 zugekehrten Begrenzung des nächstfolgenden Skalengliedes 43
zusammenfällt; bei weiterer Zeigerbewegung erscheint auch
in diesem Skalenglied 43 das zugehörige Anzeigeorgan 38 usw.,
bis bei Maximalanzeige in allen Skalengliedern 42 bis 46
die zugehörigen Anzeigeorgane 37 bis 41 sichtbar geworden
sind. Da die Breite jedes Anzeigeorganes mindestens so
groß wie der restliche Bewegungsweg des Zeigers nach
seinem Sichtbarwerden im zugehörigen Skalenglied ist,
bleibt das jeweilige Anzeigeorgan nach dem Erscheinen im
zugehörigen Skalenglied und bei weiterer Temperaturerhöhung sichtbar. Es ist aber auch denkbar, eines, mehrere
oder alle Anzeigeorgane so schmal auszubilden, daß sie
nach dem Erscheinen im jeweils zugehörigen Skalenglied und
bei weiterer Temperaturerhöhung wieder verschwinden,d.h. in den unsichtbaren Bereich zwischen benachbarten Skalengliedern bewegt werden. Zur Erhöhung der Deutlichkeit der Anzeige können die Anzeigeorgane 37 bis 41 unterschiedliche Farbgebung aufweisen. Zweckmäßig hat das zur Querkante 24 benachbarte Anzeigeorgan 37 blaue Farbe; die beiden folgenden Anzeigeorgane 38, 39 sind zweckmäßig von gelber Farbe, während die beiden letzten Anzeigeorgane 40, 41 von roter Farbe sind. Zusätzlich hierzu kann in Zuordnung zu jedem Skalenglied der jeweils zugehörige Temperaturwert in der gebräuchlichen Meßeinheit auf der Skala, d.h. am Gehäusedeckel 2, durch entsprechende Beschriftung oder dgl. angegeben sein. Der Gehäusedeckel 2 besteht zweckmäßig aus glasklarem Werkstoff, der an seiner Innenfläche 32 und/oder an seiner Außenfläche 34 derart mit einer Farbschicht versehen ist, daß die Skalenglieder 42 bis 46 als Sichtschlitze frei bleiben.

Wie Fig. 4 ferner zeigt, sind die schmalen Gehäusewandungen 10, 11 in geringem Abstand vom Flanschrand 30 zu federnden, in entspanntem Zustand geringfügig über die Außenflächen der Gehäusewandungen 10, 11 vorstehenden Klipsen 50 ausgestaltet. Wird das Thermometer in eine, seinem zum Gehäusedeckel 2 parallelen Außenquerschnitt entsprechende Öffnung 52 einer Platte, einer Gerätewand 51 oder dgl. gesteckt, so werden die Klipse 50 vor Anlage des Flanschrandes 30 an dieser Gerätewand 51 federnd nach innen gedrückt, bis sie bei Anlage des Flanschrandes 30 an der einen Oberfläche dieser Gerätewand 51 wieder nach außen springen und die Gerätewand benachbart zur Öffnung 52 an der anderen Oberfläche hintergreifen, wodurch das Thermometer ohne zusätzliche Befestigungsmittel sicher und lösbar gehalten ist.

0126983

- 1 -

Anmelderin:     E.G.O. Elektro-Geräte
                Blanc u. Fischer
                Rote-Tor-Straße, Postfach 11 80

                7519 Oberderdingen


Thermometer

A n s p r ü c h e
_____


1. Thermometer mit einer an einem Träger an einer Seite
   abgestützten Ausdehnungsdose, die über ein Kapillarrohr mit einem Temperaturfühler in Verbindung steht und
   deren andere Seite mit einem optischen, beweglich gelagerten Zeiger für die Temperaturanzeige mechanisch verbunden ist, dadurch gekennzeichnet, daß die zugehörige
   Seite der Ausdehnungsdose (3) an einem am Träger (1)
   gelagerten Lenker (5) angreift , der in einem gegenüber
   dem Abstand der Ausdehnungsdose (3) größeren Abstand
   von der Lagerstelle (17) am Träger (1) mit dem Zeiger (7) verbunden ist.


2. Thermometer nach Anspruch 1, dadurch gekennzeichnet, daß
   der Zeiger (7) und/oder die Ausdehnungsdose (3) unmittelbar am Lenker (5) befestigt ist, wobei die Ausdehnungsdose (3), insbesondere mit einer in ihrer Achse (19)
   liegenden und/oder das Kapillarrohr (4) umschließenden
   Federmutter (8) o.dgl. befestigt und der Lenker (5) durch
   einen federnden Arm, wie eine Blattfeder, gebildet ist,
   die durch formschlüssige Einbettung o.dgl. starr in den Träger
   (1) und/oder in den Zeiger (7) eingespannt ist.

3. Thermometer nach Anspruch 1 oder 2, dadurch gekennzeichnet, daß der Lenker (5) zwischen der Angriffsstelle der Ausdehnungsdose (3) und der Lagerstelle (17) am Träger (1) eine zur Ausdehnungsdose (3) gerichtete Abkröpfung (15) aufweist, derart, daß die Lagerstelle (17) in Achsrichtung der Ausdehnungsdose (3) näher bei dieser als die Angriffsstelle liegt.

4. Thermometer nach einem der Ansprüche 1 bis 3, dadurch gekennzeichnet, daß zwei, insbesondere gleiche Lenker (5, 6) nach Art eines Parallelogrammgestänges vorgesehen und am Träger (1) gelagert sowie mit dem Zeiger (7) verbunden sind und daß die Ausdehnungsdose (3) vorzugsweise nur an einem Lenker (5) befestigt ist.

5. Thermometer nach einem der Ansprüche 1 bis 4, dadurch gekennzeichnet, daß der Zeiger (7) am freien Ende des Lenkers (5 bzw. 6) angeordnet, vorzugsweise plattenförmig ausgebildet und beispielsweise mit den parallel zu seiner Bewegungsrichtung (Pfeil 35) liegende Seitenkanten (22, 23) am Träger (1) geführt ist.

6. Thermometer nach einem der Ansprüche 1 bis 5, dadurch gekennzeichnet, daß der Träger (1) als die Ausdehnungsdose (3), den bzw. die Lenker (5, 6) und/oder den Zeiger (7) aufnehmendes Gehäuse ausgebildet ist, daß die Ausdehnungsdose (3) benachbart zum Boden (14) des topfförmigen Gehäuses und der Zeiger (7) benachbart zu einem das Gehäuse schließenden, dem Boden (14) gegenüberliegenden Gehäusedeckel (2) angeordnet sind, und daß der Zeiger (7) mit geringem Spaltabstand an den Innenflächen

- 3 -

der zugehörigen Seitenwände (12, 13) des Trägers (1)
geführt sowie vorzugsweise zwischen zwei Anschlagstellungen bewegbar ist, die durch Anlage des Zeigers (7) an
den Innenflächen der quer zur Achse (19) der Ausdehnungsdose (3) liegenden Trägerwände (10, 11) bestimmt sind.

7. Thermometer nach einem der Ansprüche 1 bis 6, dadurch gekennzeichnet, daß die Ausdehnungsdose (3) zwischen einem Lenker (5) und der zu diesem benachbarten Trägerwand (10) angeordnet ist und daß vorzugsweise das Kapillarrohr (4) zwischen den Lenkern (5, 6) zur Ausdehnungsdose (3) geführt ist, wobei zur Abstützung der beispielsweise mit ihrer Umfangsfläche an den Innenflächen zweier
gegenüberliegender Trägerwände (12, 13) anliegenden und/oder
mit einem Abschnitt ihres Umfanges in eine im Boden (14)
des Trägers (1) vorgesehene Fensteröffnung (27) eingreifenden Ausdehnungsdose (3) ein Stellglied (9), insbesondere eine Gewindespindel, vorgesehen ist, die in der
Achse (19) der Ausdehnungsdose (3) liegt, in der zu
dieser benachbarten Trägerwand (10) gelagert ist, wobei
insbesondere die Abstützfläche (29) des Stellgliedes (9)
für die Ausdehnungsdose (3) ballig gekrümmt ist.

8. Thermometer nach einem der Ansprüche 1 bis 7, dadurch
gekennzeichnet, daß der Zeiger (7) an seiner von der
Ausdehnungsdose (3) abgekehrten Seite mit sich über den
Zeigerweg aufeinanderfolgend auf Skalenglieder (42 bis
46) des Trägers ausrichtenden Anzeigeorganen (37 bis
41), wie Farblinien, versehen ist, denen als Skalenglieder Sichtöffnungen, insbesondere linienförmige
Sichtöffnungen, zugeordnet sind, wobei in einer End-

- 4 -

stellung des Zeigers (7), insbesondere in der der Maximalanzeige entsprechenden Endstellung mehrere bis alle
abgestuft unterschiedlich breiten Anzeigeorgane (37
bis 41) auf die zugehörigen Skalenglieder (42 bis 46)
ausgerichtet sind.

9. Thermometer nach Anspruch 8, dadurch gekennzeichnet, daß
die Skalenglieder (42 bis 46), in gleicher, insbesondere
konstanter Teilung angeordnet sind und daß vorzugsweise
die Anzeigeorgane (37 bis 41) von einem Skalenende zum
anderen in der Breite zunehmen.

10. Thermometer nach Anspruch 8 oder 9, dadurch gekennzeichnet, daß die Skalenglieder am Gehäusedeckel (2) vorgesehen sind, der vorzugsweise aus glasklarem Werkstoff
besteht, welcher unter Freilassung der insbesondere in
Bewegungsrichtung (Pfeil 35) Sichtöffnungen mit einer
im wesentlichen undurchsichtigen Deckschicht versehen
ist.

0126983

Fig.1
Fig.2
Fig.3
Fig.4
Fig.5

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-C- 647 828 (S. SMITH & SONS [MOTOR ACCESSORIES]) * Figuren 1,3; Seite 2, Zeile 8 - Seite 3, Zeile 15 * | 1,4 | G 01 K 5/32<br>G 01 D 5/04<br>G 01 D 13/04 |
| Y | | 2,3 | |
| | --- | | |
| Y | PRODUCT ENGINEERING, Band 33, Nr. 7, 2. April 1962, Seiten 56-57, New York, US; F. STRASSER: "10 Ways to amplify" * Figur 6; Seite 57 * | 2,3 | |
| | --- | | |
| X | DE-A-2 714 550 (VDO ADOLF SCHINDLING) * Figur 1; Seite 6, Zeile 15 - Seite 7, Zeile 21 * | 1 | |
| | --- | | RECHERCHIERTE SACHGEBIETE (Int. Cl. ³) |
| X | DE-A-2 454 658 (METZ MANNHEIM) * Figuren 1,2; Seite 7, Zeile 13 - Seite 8, Zeile 10 * | 1 | G 01 K 5/00 |
| A | | 5 | G 01 D 5/00<br>G 01 D 7/00<br>G 01 D 11/00<br>G 01 D 13/00<br>G 01 L 19/00 |
| | --- | | |
| A | FR-A-2 266 215 (FISCHER) * Figuren 1,2; Seite 2, Zeile 2 - Seite 3, Zeile 21 * | 7 | |
| | ---     -/- | | |

Der vorliegende Recherchenbericht wurde für alle Patentansprüche erstellt.

| Recherchenort<br>DEN HAAG | Abschlußdatum der Recherche<br>24-08-1984 | Prüfer<br>DRYSDALE N. |
|---|---|---|

**Europäisches Patentamt**

# EUROPÄISCHER RECHERCHENBERICHT

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl.³) |
|---|---|---|---|
| A | FR-A-1 603 879 (S.A. D.B.A.) <br> * Figuren 1,2,8-10; Seite 3, Zeile 21 - Seite 5, Zeile 5; Seite 7, Zeile 25 - Seite 9, Zeile 4 * <br><br> ----- | 8,9 | |

RECHERCHIERTE SACHGEBIETE (Int. Cl.³)

Der vorliegende Recherchenbericht wurde für alle Patentansprüche erstellt.

| Recherchenort <br> DEN HAAG | Abschlußdatum der Recherche <br> 24-08-1984 | Prüfer <br> DRYSDALE N. |
|---|---|---|